# EUROPEAN PATENT APPLICATION

(11) **EP 1 932 630 A1**
(43) Date of publication of application: **18.06.2008**
(21) Application number: 06125809.1
(22) Date of filing: 11.12.2006
(51) Int. Cl.: B25J 17/02, B25J 19/00, B05B 13/04, B25J 9/16

(54) **Wrist of an industrial robot**

(71) Applicant: ABB AS, 1396 Billingstad (NO)
(72) Inventor: Krogedal, Arnulf, 4322 Sandnes (NO)
(74) Representative: Dahlstrand, Björn

(57) **Abstract**

A robot wrist with a plurality of rotatable parts (1,2,3) arranged in series with each other arranged to be mounted on a robot arm or automation machine to enable rotary movement of the first wrist part (1) about a first axis, and a second wrist part (2) journalled in the first wrist part. Rotary drive for the sixth axis, tool holder or flange (7) is transferred by a flexible drive member (4) from an input drive means in the proximity of the first wrist part to the tool flange at the distal end of the robot arm. The robot wrist may preferably comprise an inner protection hose. The flexible drive member (4) may be arranged as an inner hose (4).

## Description

### TECHNICAL FIELD.

The invention relates to a robot wrist and to an industrial robot or other manipulator or automation machine provided with a said robot wrist. The invention is well suited to application of coatings such as with spray painting automobiles.

### BACKGROUND ART

US 4,690,012 and DE 3431033 entitled Robot wrist, describes a robot wrist for use with an industrial robot. Industrial robots are used to carry out a wide range of industrial and/or commercial tasks quickly and accurately. In many applications, for example welding car bodies or painting automobiles, the robot must operate a tool such as an arc welding tip, paint sprayer or a gripper etc. position it and orient it accurately, sometimes within a confined space. US 4,690,012 describes a robot wrist comprising three independently rotatable wrist parts. A first part is attached to the arm of a robot and rotates about a first axis, a second wrist part is rotatably attached to the first and arranged with gear pinions to rotate the second gear part about a second axis of rotation, and a third wrist part is similarly arranged rotatably mounted on the second part and drivable about a third axis of rotation.

The entire wrist section is formed so as to enclose a hollow space inside the wrist sections to allow positioning of other apparatus inside the wrists. In particular, the hollow interior of the wrist contains a protection hose, or other conduit, through which cables, wires, tubes or smaller hoses are arranged for supplying electric, compressed air or hydraulic power to one or more tools operated by the robot, and/or sending/receiving control signals or sensor data to or from the tool. WO 2004/082898 entitled Robot member, assigned to ABB, describes a hollow wrist with two or three wrist parts. As with US 4,690,012, the hollow wrist is arranged with gears arranged to drive or rotate the tool attached to the end of the wrist irrespective of whether the hollow wrist is in a straight position, or a bent position, or is moving between one position and another.

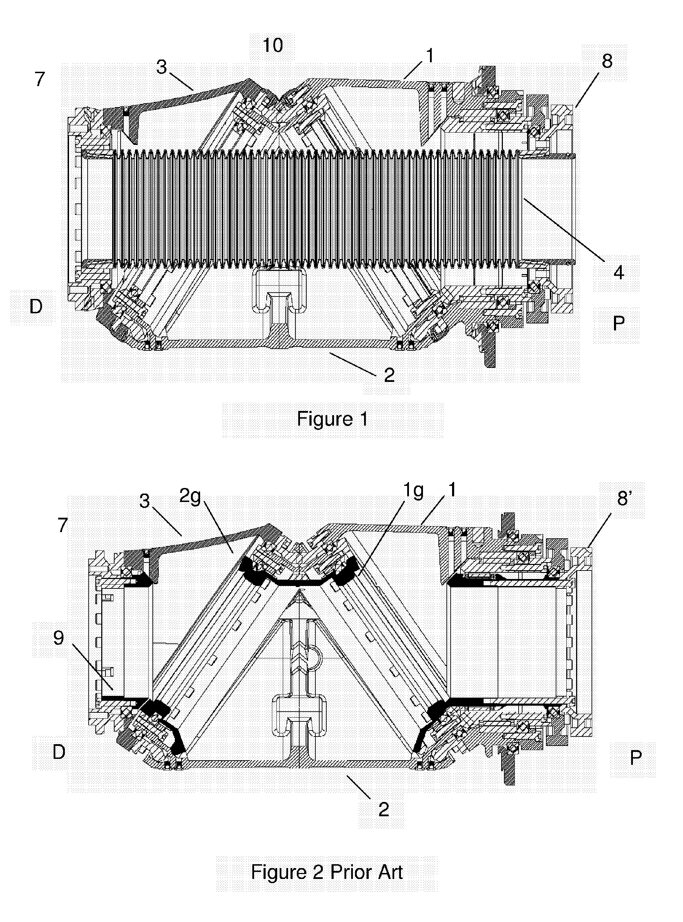

EP 1 632 320, entitled Robot wrist with hose drive for rotating a supply hose, and associated process; assigned to Dürr Systems GmbH, describes a hollow wrist with three sections and an inner protection hose. The hand parts 12, 13, 14, which are indicated in Figure 2a-c comprise gear wheels to drive the hand parts and the tool flange 11, the part that holds a paint applicator. The tool flange 11 is described as driven by rotation of driveshaft 25 at the input end via outer gear wheels 26, 27 and beveled gear pairs 28-29, 30-31, 32-33 to the tool flange 11 at the output end.

### SUMMARY OF THE INVENTION

According to a first aspect of the invention, an improved robot wrist for an industrial robot or manipulator is provided which comprises a plurality of rotatable parts arranged in series with each other, comprising at least a first wrist part and a second wrist part, wherein each wrist part is arranged with one or more gear members to drive a said rotary movement of any said wrist part relative to said another wrist part, and where said robot wrist is arranged with a tool flange for carrying an applicator or other tool attached to the second or third or other distal wrist part, wherein said robot wrist is arranged with a flexible drive member for transferring power from an input drive means in the proximity of the first part of the wrist to a tool flange or other tool means attached to the distal part of the distal wrist part, the flexible drive member comprising at least one flexible part.

According to an embodiment of the invention, an improved robot wrist is provided for an industrial robot or manipulator which comprises a flexible drive member for transferring power from an input drive means at the proximal end of the wrist to a tool flange or other tool means as the distal end wherein the flexible drive member comprises at least one flexible part arranged as an inner hose inside said robot wrist.

According to an embodiment of the invention, an industrial robot or manipulator with an improved robot wrist is provided which comprises a flexible drive member for transferring power from an input drive means at the proximal end of the wrist to a tool flange or other tool means as the distal end wherein the flexible drive member is comprised as at least one flexible inner hose arranged inside said robot wrist.

According to another embodiment of the invention, an industrial robot or manipulator with an improved robot wrist is provided which comprises a single drive member for transferring power from an input drive means at the proximal end of the wrist to a tool flange or other tool means as the distal end wherein the single drive member is comprised as at least one flexible part arranged inside said robot wrist.

According to another embodiment of the invention, an industrial robot or manipulator with an improved robot wrist is provided which comprises a flexible drive member for transferring power from an input drive means at the proximal end of the wrist to a tool flange or other tool means as the distal end wherein the at least one flexible part is arranged flexible in a direction perpendicular to an axis of rotation of the flexible drive member.

According to another further embodiment of the invention, an industrial robot or manipulator with an improved robot wrist is provided which comprises a flexible drive member for transferring power from an input drive means at the proximal end of the wrist to a tool flange or other tool means at the distal end wherein the at least one flexible part comprises two or more parts joined together.

According to an alternative embodiment of the invention, an industrial robot or manipulator with an improved robot wrist is provided which comprises a flexible drive member for transferring power from an input drive means at the proximal end of the wrist to a tool flange or other tool means as the distal end wherein the two or more parts are joined together by a hinge or pivot means.

According to another embodiment of the invention, an improved robot wrist for an industrial robot or manipulator is provided which comprises a flexible drive member for transferring power from an input drive means at the proximal end of the wrist to a tool flange or other tool means as the distal end wherein at least one of two or more parts are joined together and at least one part is arranged abutting a guide part, and/or support and/or bearing inside the hollow wrist.

According to another embodiment of the invention, an improved robot wrist for an industrial robot or manipulator is provided which comprises a flexible drive member for transferring power from an input drive means at the proximal end of the wrist to a tool flange or other tool means as the distal end wherein at least one of the two or more parts are joined together forms an inner protection hose, or in the case of a single flexible member, it is arranged as an inner hose or inner protection hose.

According to another embodiment of the invention, an improved robot wrist for an industrial robot or manipulator is provided which comprises a flexible drive member for transferring power from an input drive means at the proximal end of the wrist to a tool flange or other tool means as the distal end wherein a sensor is arranged on or in the robot wrist for measuring a parameter dependent on a movement of the tool flange and/or the input drive means.

According to another embodiment of the invention, an improved robot wrist for an industrial robot or manipulator is provided which comprises a flexible drive member for transferring power from an input drive means at the proximal end of the wrist to a tool flange or other tool means as the distal end wherein a sensor is arranged on or in the robot wrist and the sensor is arranged placed attached to a guide or bearing supporting the flexible member.

According to another embodiment of the invention, an improved robot wrist for an industrial robot or manipulator is provided which comprises a flexible drive member for transferring power from an input drive means at the proximal end of the wrist to a tool flange or other tool means as the distal end wherein a part of the flexible drive member is arranged as an inner hose which comprises an insulating material with a dielectric strength of between 20-100kV.

According to another embodiment of the invention, an improved robot wrist for an industrial robot or manipulator is provided which comprises a flexible drive member for transferring power from an input drive means at the proximal end of the wrist to a tool flange or other tool means as the distal end wherein a part of the flexible drive member is arranged as an inner hose and the outside and/or inside surface of the flexible drive member arranged as an inner hose is arranged with a conductive or semiconductive material to avoid build up of an electrical charge.

According to another embodiment of the invention, an improved robot wrist for an industrial robot or manipulator is provided which comprises a flexible drive member for transferring power from an input drive means at the proximal end of the wrist to a tool flange or other tool means as the distal end wherein the improved robot wrist comprises two said wrist parts.

According to another embodiment of the invention, an improved robot wrist for an industrial robot or manipulator is provided which comprises a flexible drive member for transferring power from an input drive means at the proximal end of the wrist to a tool flange or other tool means as the distal end wherein the improved robot wrist comprises three said wrist parts.

According to another aspect of the invention, a method is provided for operating an industrial robot or manipulator with a robot wrist comprising a plurality of rotatable parts arranged in series with each other, comprising at least a first wrist part and a second wrist part, wherein each wrist part is arranged with one or more gear members to drive a said rotary movement of any said wrist part relative to said another wrist part, where said robot wrist is arranged with a tool flange for carrying an applicator or other tool attached to the second or a third wrist part, the method further comprising generating a control signal to drive said tool flange, applying a control signal to a drive motor arranged to drive a flexible drive member via an input drive means as a power transmission element in order to move said tool flange dependent on the control signal.

According to another embodiment of the invention, a method is provided for operating an industrial robot or manipulator with a robot wrist comprising a plurality of rotatable parts arranged in series with each other, where said robot wrist is arranged with a tool flange for carrying an applicator or other tool attached to the second or a third wrist part, the method comprising generating a control signal to drive said tool flange and applying a control signal to a drive motor arranged to drive a flexible drive member wherein the method further comprises applying a compensation value to the control signal to the drive motor.

According to another embodiment of the invention, a method is provided for operating an industrial robot or manipulator with a robot wrist comprising a plurality of rotatable parts arranged in series with each other, where said robot wrist is arranged with a tool flange for carrying an applicator or other tool attached to the second or a third wrist part, the method comprising generating a control signal to drive said tool flange and applying a control signal to a drive motor arranged to drive a flexible drive member wherein the method further comprises calculating a compensation value for the single drive member based on a model of at least one mechanical characteristic of the single drive member.

According to another embodiment of the invention, a method is provided for operating an industrial robot or manipulator with a robot wrist comprising a plurality of rotatable parts arranged in series with each other, where said robot wrist is arranged with a tool flange for carrying an applicator or other tool attached to the second or a third wrist part, the method comprising generating a control signal to drive said tool flange and applying a control signal to a drive motor arranged to drive a flexible drive member wherein the method further comprises calculating a compensation value for the single drive member dependent on a sensed value of tool flange movement fed back from a sensor arranged on or in the robot wrist

In another aspect of the invention a system is provided comprising a robot control unit and at least one industrial robot or manipulator with an improved robot wrist comprising a plurality of rotatable parts arranged in series with each other, where said robot wrist is arranged with a tool flange for carrying an applicator or other tool attached to the second or a third wrist part, which said system is characterised in that said robot wrist of said at least one robot is arranged with a flexible drive member, comprising at least one flexible part, for transferring power from an input drive means in the proximity of the first part of the wrist to the tool flange arranged at the distal end of the robot wrist.

In the first aspect of the invention a hollow robot wrist is provided with a plurality of rotatable parts arranged in series with each other, comprising at least a first wrist part arranged in use to be mounted to a robot arm or automation machine to enable rotary movement of the first wrist part about a first axis, a second wrist part journalled in the first wrist part, wherein each said wrist part is arranged with one or more gear members to drive a said rotary movement of any said wrist part relative to said another wrist part, and wherein the sixth axis is arranged driven by power transmitted from an input gear to the sixth axis by means of a flexible drive member, which may be arranged as an inner hose.

The principal advantage of the invention is that the improved robot wrist has a simplified means for power transmission to the sixth axis, about which axis is arranged the tool holder, onto which a paint applicator (or other tool) and may be mounted. Instead of requiring six or up to six gear wheels to transmit power from an input at on end of the wrist to the tool flange at the other (far) end of the wrist, a single inner hose is arranged as a power transmission element between a tool on the sixth axis or tool flange, at the distal end of the robot wrist, and a drive input to the robot wrist.

Thus in comparison for example to the prior art construction of WO 2004/082898, an aspect of the present invention permits up to six gear wheel components to be omitted from the construction, thus greatly reducing the weight and inertia of the hollow wrist. Reduction of weight and inertia is of particular importance because the hollow wrist is mounted at the distal end of a robot arm or manipulator. The weight and inertia of the hollow wrist acting at the end of the arm exerts large forces on the robot structure. The weight and inertia of the wrist determines to some extent the dimensioning of the arms, motors, gearboxes etc required to operate the robot arm carrying the hollow wrist. Alternatively, a hollow wrist with substantially reduced weight offers improved movement flexibility and performance when mounted on a robot in place of a heavier wrist of the type described above.

An advantageous increase in the dimensions of the hollow space inside the hollow wrist is also provided. The inside diameter may be increased in places. This allows the inner hose, acting also as a protection hose and normally containing process lines for paint fluid, process air, perhaps solvent, perhaps control cables etc., to have an increased diameter. A larger inner hose thereby allows space for more process lines or for a process line with a greater diameter, such as the type of lines that are more easily piggable or cleanable using other methods.

In the absence of a train of gear wheels inside the wrist to transmit power to the tool flange there is also relatively more free room inside the improved robot wrist for the protection hose (or other inner hose or conduit) to bend and flex, compared to the prior art. Freer, less restricted bending and flexing results in less wear both to the protection hose and the cables, lines or other hoses inside it. This is an advantage which not only reduces wear and damage to cables and power supply wires etc. but also allows robot designers and operators more freedom in the choice and number of features and functions of the robot. The protection hose arranged as a flexible drive member may have a bend angle of up to 140° and a rotation or work envelope of up to 360° on arm 3, and more than 360° if the cables or other lines inside the inner hose are arranged for rotation exceeding 360°. Thus the hollow wrist according to an aspect of the present invention is arranged with a flexible drive member instead of the gear-wheel based drive train of the prior art such as WO 2004/082898 or US 4,690,012 in order to rotate or otherwise drive the tool attached to the end of the wrist. The tool may be driven or rotated whether the hollow wrist is in a straight position, or a bent position, or is moving between one position and another.

An advantage of this type of robot wrist is that the compact shape and high bend angle means that the robot can reach into tight places or partially enclosed spaces, such as into a hollow section or a box section of a car body to paint or treat a surface or a seam etc. The improved functionality of the present invention allows the robot to reach into spaces that are too difficult for robots with prior art wrists to reach. The straight hollow passage, compact shape and improved function of the invention increases the number and range of operations that can be cost-effectively carried out by industrial robots or manipulators.

The unique design and arrangement of a flexible means of power transmission to the tool flange, which in the preferred embodiment is formed comprising an inner protection hose, provides a wrist design that is very light in weight and compact. A further advantage of the increased size of the inner cavity without the presence of six gearwheel parts or up to six gearwheel parts is that the inner hose bends more freely. This in turn means decreased wear on the protection hose, particularly wear on the inside of the protection hose, and wear on the hoses, lines and cables etc it contains. The inner protection hose may as well comprise an advantageous material with an extremely small coefficient of friction, to further reduce wear on the cables, hoses inside the protection hose.

The increased size of the inner hole or cavity is very advantageous because a robot used, for example, in painting applications or any other surface treatment applications, may have around 20 different lines installed inside the protection hose or conduit. Lines such as for supply of different paints, different colours, flushing lines, anti-corrosion fluids, degreasing fluids, solvent lines, air lines, electrical power lines, electrical data connections. Similarly a robot used for welding may have lines for protective gases, flushing materials, fluxes, fluxing atmospheres, a welding wire feed, and so on. The increased hollow space and the symmetrical shape of the space available inside the arm enable a longer service life for the lines, hoses and cables included inside the protection hose, with increased reliability and thereby productive up-time.

The mechanical characteristics of the flexible inner protection hose when used as a transmission element may comprise less torsional stiffness in response to acceleration in one or more directions than for a traditional train of 6 gear wheels. This may be compensated for in at least two ways, described below in detail.

In another embodiment the flexible drive member may consist of consist of two or more parts joined together, of which at least one part is flexible. Thus a first and second protection hose may be linked together and operated as a single flexible drive member. The two protection hoses may be joined rigidly, flexibly or by a moveable link or hinge or pivot of some kind. A flexible drive member with one or more than one flexible part may also be arranged inside the hollow wrist and supported or fixed in place in part by a guide or bearing inside the hollow wrist.

According to another aspect of the invention a method is described for controlling the operation of the industrial robot with an improved robot wrist which comprises a flexible drive member for transferring power between an input means to the wrist to an output member, tool or tool flange generating a control signal to drive said tool flange, by means of applying a control signal to a drive motor arranged to drive the flexible drive member via the input drive means as a power transmission element in order to move said tool flange dependent on the control signal.

In a preferred embodiment of the method of the invention the method may be carried out or controlled by a computing device comprising one or more microprocessor units or computers. The control unit(s) comprises memory means for storing one or more computer programs for carrying out the improved methods for controlling the operation of an improved hollow wrist. Preferably such computer program contains instructions for the processor to perform the method as mentioned above and described in more detail below.

### BRIEF DESCRIPTION OF THE DRAWINGS

A more complete understanding of the method and system of the present invention may be had by reference to the following detailed description when taken in conjunction with the accompanying drawings wherein:
Figure 1 shows a cross section of an improved robot wrist according to an embodiment of a first aspect of the invention;
Figure 2 shows a cross section of a robot wrist in a straight position according to Prior Art;
Figures 3a-c show schematic flowcharts for one or more methods according to another aspect of the present invention;
Figure 4 shows a view in 3D of the exterior of a robot wrist in a straight position according to the Prior Art;
Figure 5 shows a schematic diagram of a system comprising a robot arranged with a robot wrist according to an embodiment of the invention;
Figure 6 shows a schematic cross section of an improved robot wrist with a flexible drive member comprising two parts according to another embodiment of the invention.

### DESCRIPTION OF THE PREFERRED EMBODIMENTS

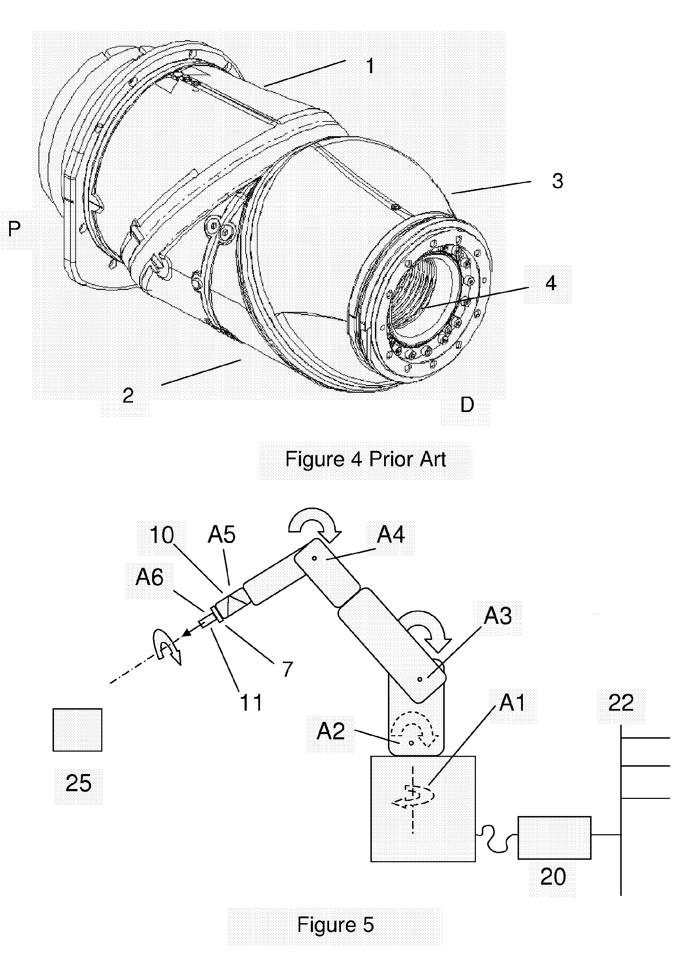

Figure 1 shows a cross section view of an embodiment of a first aspect of the present invention. Figure 2 shows a similar cross section view for a prior art robot wrist from WO 2004/082898 which will be described first before proceeding to describe the features disclosed by the present invention. Prior Art Figure 2 shows a robot wrist consisting of three main wrist parts. An exterior 3-D view of the wrist may be seen in Prior Art figure 4. In Figure 2, at an end P (proximal) closest to the robot arm, the first wrist part 1 is to be seen connected to a second wrist part 2 which is in turn connected to a third wrist part 3. At an end D (distal) furthest from the robot a tool holder 7 is arranged mounted in bearings and attached to the third wrist part 3.

In the prior art robot wrist motive power to rotate the tool holder 7 is transmitted by a train of gear components from the proximal end P to the distal end D. In Figure 2, parts of the cross section of the gear train components are shown in solid black. Thus at proximal end P the figure shows an input shaft component 8' which meshes with a larger gear ring 1g in the second part 2, which meshes or cooperates in turn with a second gear ring 2g also arranged in the second wrist part 2. Drive from second gear ring 2g is then transferred to a drive component 9 in the third wrist part 3 which component 9 is connected to a tool holder 7 at the distal end D. Thus power is transferred in a prior art straight robot wrist using a train of at least 4 gear components, or as many as 6 components in some designs.

Figure 1 shows a cross section for a robot wrist according to an embodiment of the present invention. The wrist is shown in the straight position, and is also shown to comprise an inner hose 4. Figure 1 also shows an input shaft 8 at the proximal end P which is journalled into the first wrist part 1, a second wrist part 2 which is connected to wrist part 1, and also connected a third wrist part 3. A tool holder 7 is journalled into the third wrist part 3. In the robot wrist of the present invention mechanical power to rotate the tool holder 7 may be transmitted by a flexible component 4 from the proximal end P to the distal end D.

An inner hose 4 or inner protection hose is preferably arranged as a flexible drive member and as a substantially single drive member transferring rotational power from the input shaft at the proximal end nearest the robot arm to the tool holder at the distal end. A flexible inner hose or inner protection hose may be used as a single component to provide a drive means by being connected to the input shaft 8, and arranged with a suitable meshing or locking collar or other arrangement at the tool holder 7 such that rotation of the drive shaft is transferred to rotation of the tool holder. The arrangement of various axes of an industrial robot are shown in Figure 5 and described in detail below.

An flexible inner hose 4 arranged as a flexible drive member for transferring power to the tool holder 7 on axis 6 may also function as a protection hose, and include a number of process lines, hoses, cables and the like. It is often found that wear may take place to some extent on hoses, process lines, cables etc inside a protection hose. However, the extra internal space available in an improved robot wrist of the present invention provides for an inner hose with an increased internal diameter.

The torque characteristics of the flexible drive member 4 also functioning as an inner protection hose may, depending on the tool holder and the operational speeds and/or accelerations, exhibit less stiffness in response to acceleration in a torsional direction than a traditional train of gear wheels when used as a transmission element. This may be compensated for in at least two ways.

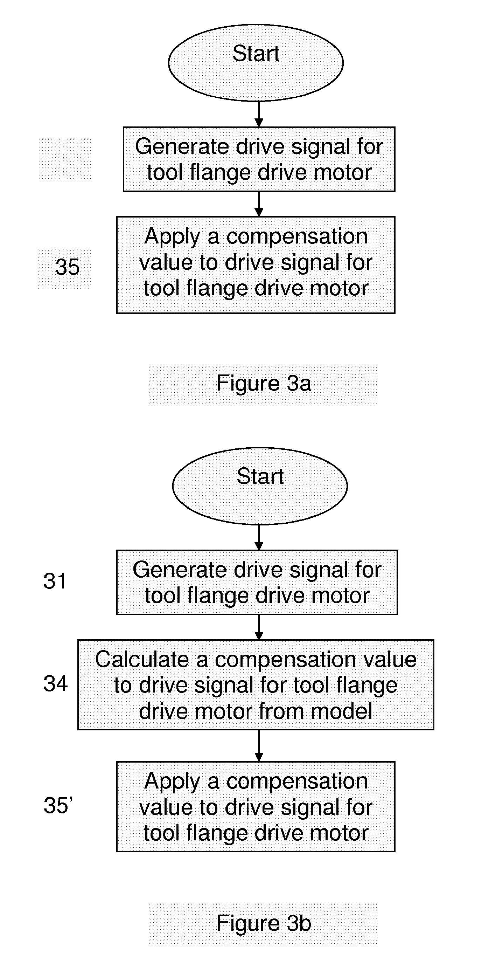

A model based correction may be generated within a robot control unit (or other control unit or controller of the robot or robot motor drive controller) and a correction dependent on the target speed and/or acceleration and calculated by means of a model then applied to the control signal to the motor driving axis 6. A model is used to calculate and predict what the movement of the flexible drive member would be in response to a torque input or other imposed force acting on the drive member. Such a model is based on at least one mechanical characteristic of said inner protection hose. Figure 3a shows in a simplified schema a flowchart for such as method. The flowchart includes the following blocks:
31 Generate drive signal for tool flange drive motor,
35 Apply a compensation value to drive signal for tool flange drive motor.

Figure 3b includes the following blocks:
31 Generate drive signal for tool flange drive motor,
34 Calculate a compensation value to drive signal for tool flange motor from model; this is a model based correction of the drive control signal;
35' Apply a compensation value to drive signal for tool flange drive motor; this correction having been calculated from the model.

Alternatively or as well deviations from expected operation may be measured and a correction or compensation value calculated from the measured deviation. For example a sensor may be arranged to measure speed or position of the flexible drive member 4 or of another component in the drive train such as the tool flange 7 or the input shaft 8, for example. Measurements of position and/or speed may be compared with target values and a correction value generated to provide feedback control over the tool holder movement. Depending on the application such feedback measurements may be adapted to provide a feed-forward control function to adapt the motor control target signal.

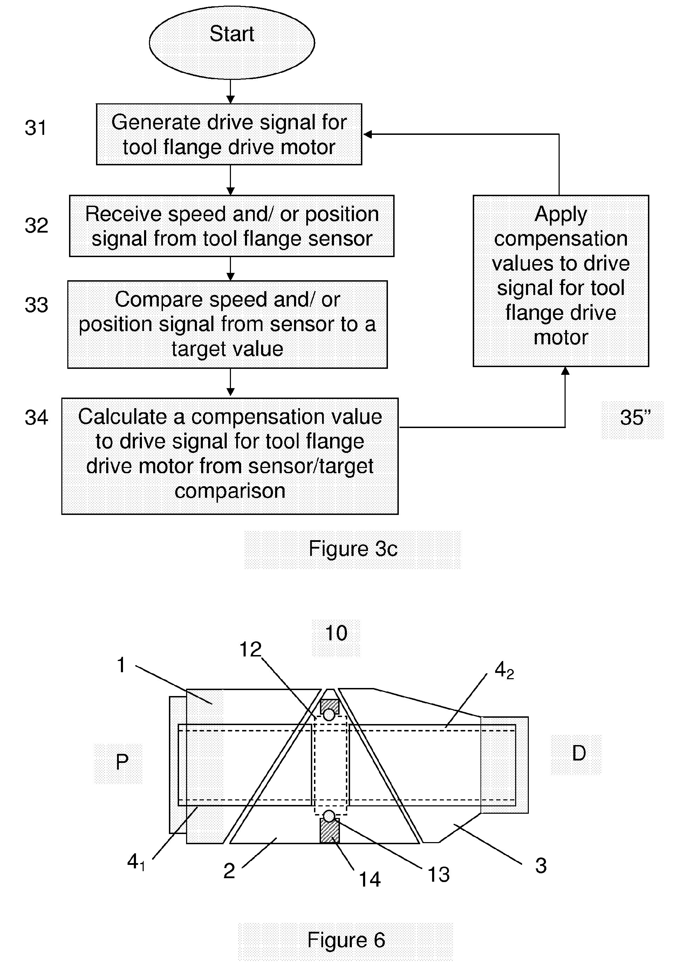

Figure 3c shows a simplified schema for such a method, and includes the following blocks:
31 Generate drive signal for tool flange drive motor,
32 Receive speed and/or position signal from tool flange sensor; (a sensor may be arranged on or in another part of the robot wrist;)
33 Compare speed and/or position signal from sensor to a target value;
34 Calculate a compensation value to drive signal for tool flange motor from model; measurement based correction of the drive control signal;
35" Apply compensation values to drive signal for tool flange drive motor; this correction having been calculated from the model.

An industrial robot is normally arranged with one or more control units. For example, a specific or central control unit is often used to control a single robot, although certain robot controllers may control a number of robots simultaneously. In addition, a robot may also have one or more distributed or local control units that control a particular axis or tool or fixture etc in a paint booth or working area or robot cell. Figure 5 shows a schematic diagram for a simple system including at least one industrial robot arranged with a robot wrist according to an embodiment of the invention. The figure shows a robot arranged to rotate about a first axis A1, with an arm jointed about a second A2, third A3 and fourth A4 axis. The robot wrist 10 forms a fifth axis A5. A tool or tool holder 7 is arranged attached to the robot wrist 10 and the applicator 11 or other tool is capable of being rotated about the sixth axis A6 shown in the diagram. The diagram also shows in a schematic way the robot may be connected to a robot control unit 20 which may be connected to a data network 22 of some sort. The robot may carry out a painting, coating or other operation on a work piece 25.

In other embodiments a combination of model-based, measurement based, feedback and/or feed forward control method may be used. The correction or compensation values are preferably calculated by a program or computer program running in a processor, computer or electronic component comprising a computer functionality. The processor may be arranged locally in the robot wrist or arm, or may be arranged in a distributed control unit of the robot, or in a central robot control unit.

The control unit(s) comprise(s) memory means for storing one or more computer programs for carrying out the improved methods for controlling the operation of a mechanical press. The memory means may comprise a non-volatile magnetic storage means such as, and not limited to, any of an optical or magneto-optical storage means, a flash memory, a hard drive. A database, or part thereof, may be stored in a computer-readable memory storage device and contain data which may be accessed by a computer program such as named above. In particular the database may contain numbers, facts and data recorded about parameter values, set-points, formulae and/or other technical data which have been empirically generated, extracted from service data, or test results, calculated or obtained by other eg simulation means, which data is intended for use in calculations for carrying out the method in order to determine a measured value, a best estimate or modeled value for a compensation value to a drive signal to the tool. The memory means may be arranged as re-writeable, at least in part, for example as a flash memory or FGPA device, in order to allow for example for updates of device information, parameter values, set point values or computer program code.

As described above, the inner protective hose may contain a plurality of wires, hoses and cables, perhaps a total 20 or more. Extension or over-extension of the separate hoses and cables contained in the inner hose may also be minimised by arranging them in a predetermined pattern in the inner protection hose of the robot wrist before normal operations. By applying for example a predetermined twist, relative to the planned direction and degree of rotation of the wrist parts, it is possible to compensate for variation in length of the individual hoses and cables when the robot wrist rotates and bends during normal operations. For example, a twisted wire format of up to 180 degrees or more may be applied to at least some of the hoses and/or cables when they are installed inside the robot wrist.

In addition, the inside of the flexible drive member in the form of an inner protection hose, or inner surface of the inner hose may comprise a low friction layer, including such material as a fluoropolymer or other low-friction material. The structure of the hose may comprise a single phase plastic material or a layered plastic material. Elastomeric, other polymeric or composite materials may be used. The plastic material may comprise in part a fluoropolymer, such as the plastic polytetrafluorethylene (PTFE) commonly referred to by the trademark name Teflon (Trademark of DuPont Inc.), or other fluoropolymer in a blend, copolymer, composite or layered structure. The use of a friction reducing material such as the fluoropolymer greatly reduces any friction between the inside of the protection hose and the wires, cables, hoses etc it contains. On the outside and/or inside of the inner hose a conductive or semiconductive material or layer may be arranged to reduce build-up of a voltage on the hose. This may be necessary when the process lines inside the inner hose contain a paint or other fluid which is maintained at a high voltage at the point of application, for example with an electrostatic paint applicator, bell applicator or paint gun.

The structure of the inner hose as a drive member may comprise at least two phases and include reinforcing elements of a different diameter, such as metal rings or plastic rings. The metal rings may in an alternative embodiment be arranged as a continuous spiral or helix of wire arranged towards the outside, or arranged around the outside, of a plastic hose that is moulded to a corrugated form in contrast to a plastic hose combined with discrete rings. The wire rings or spiral may also be covered by a layer of plastic.

In another embodiment the flexible drive member may consist of two parts joined together. Thus a first and second protection hose may for example be joined or be linked together and operated as a single flexible drive member.

Figure 6 shows schematically a cross section of a robot wrist 10 in a straight position. The robot wrist shown has three wrist parts 1-3 and with a flexible drive member comprising two inner protection hoses joined together. It shows the first wrist part 1 at the P proximal end, the second wrist part 2 in the middle and a third wrist part 3 at the distal end D. In this embodiment the inner hose is arranged as a first hose 4₁ and a second hose 4₂ which are joined to each other by a third hollow part 12. The joining part 12 is arranged with bearing 13 and with a support or guide part 14. The principle is that a flexible drive member may be formed of more than one part, and may also be formed from more than one flexible part 4₁, 4₂. Or to put it another way, the flexible member comprises at least one flexible part, such as 4₁ or 4₂. A flexible drive member may alternatively or as well be supported by a guide 14 and or be arranged with a bearing 13. of some sort. This may be a ball bearing, roller bearing, plain bearing or other type.

The two protection hose may be joined by a moveable link or hinge or pivot of some kind. A single part protection hose, or two protection hoses or similar may be linked together to form a substantially single drive member which is flexible.
In the example of the diagram a flexible drive member with two flexible parts may be formed from two or more hoses joined together. A flexible drive member with two or more parts may be joined using a substantially rigid join or by means of a joint that is arranged for a movement for example for one or more of the two parts to pivot or swivel respective the other. The advantage of a flexible drive member supported by a guide and/or bearing is that the hoses so arranged provide a flexible drive member with a greater degree of torsional stiffness than for an unsupported flexible member spanning the complete transmission distance.

In another embodiment a hollow wrist may be arranged with two wrist parts arranged in series and so providing about 70% or the working envelope normally provided by the hollow wrist arranged with three wrist parts for operations that only require a limited working envelope.

There are several variations and modifications which may be made to the disclosed solutions, and embodiments of the invention may also be used to coat different types of paint, two-component paint, basecoat, primer and so on. Similarly the above described solutions may also be adapted to coat or spray other substances such as protective coatings, sealants, for sealing, gluing, waxing, hot waxing (in cavities), and spraying of corrosion inhibiting material. Methods of the invention may be supervised, controlled or carried out by one or more computer programs. Instead of a paint or coating applicator tool the industrial robot with an improved wrist according to an embodiment of the invention may be used to operate another type of tool, such as a welding tool, soldering tool, gripper or other tool suitable for a robot. The industrial robot with the improved hollow wrist may be used to carry out any operation from the group of: riveting, fettling, folding plate, cutting, bending plate, hemming plate, gripping an object, manipulating an object, stacking, pick and place.

In this description an industrial robot with 5 axes and a sixth tool axis has been described; however the use of the invention is not limited to an industrial robot with a particular number of axes. It should be noted that while the above describes exemplifying embodiments of the invention, there are several variations and modifications which may be made to the disclosed solution without departing from the scope of the present invention as defined in the appended claims.

## Claims

1. A industrial robot or manipulator with a robot wrist comprising a plurality of rotatable parts arranged in series with each other, comprising at least a first wrist part (1) and a second wrist part (2), wherein each wrist part is arranged with one or more gear members to drive a said rotary movement of any said wrist part relative to said another wrist part, where said robot wrist is arranged with a tool flange (7) for carrying an applicator (11) or other tool attached to the second (2), or third (3) or a other distal wrist part, **characterised in that** said robot wrist (10) is arranged with a flexible drive member (4), comprising at least one flexible part, for transferring power from an input drive means (8) in the proximity of the first part of the wrist (1) to a tool flange (7) or other means attached to the distal part of the distal wrist part.

2. A device according to claim 1, **characterised in that** the flexible drive member (4) is comprised as at least one flexible inner hose arranged inside said robot wrist.

3. A device according to claim 1, **characterised in that** the at least one flexible part is flexible in a direction perpendicular to an axis of rotation of the flexible drive member.

4. A device according to claim 3, **characterised in that** the at least one flexible part comprises two or more parts (4₁, 4₂) joined together.

5. A device according to claim 4, **characterised in that** the two or more parts are joined together by a hinge or pivot means.

6. A device according to claim 4 or 5, **characterised in that** at least one of the two or more parts joined together is arranged abutting a guide part (14) or bearing (13) in the hollow wrist.

7. A device according to claim 1 or 6, **characterised in that** the flexible drive member is equipped with a drive means connecting a first end of the flexible drive member to an input drive shaft (8) in the proximity of the first part (1) of the wrist, and a means for attaching a second end of the flexible drive member to the tool flange (7) at the distal end of the wrist.

8. A device according to claim 1, **characterised in that** the flexible drive member (4) is arranged as an inner hose or inner protection hose.

9. A device according to claim 8, **characterised in that** at least one of the two or more parts joined together forms an inner protection hose.

10. A device according to claim 8 or 9, **characterised in that** the flexible drive member (4) arranged as an inner hose passing through the inside of the wrist parts (1-2, 1-3) has the same total length when arranged in each of a bent and a straight position.

11. A device according to claim 1 or 8, **characterised in that** the flexible drive member (4) comprises an inner hose arranged to enclose a plurality of process lines in the form of hoses and/or cables are arranged inside said inner hose inside the wrist parts (1, 2, 3).

12. A device according to claim 11, **characterised in that** the plurality of hoses and/or cables are twisted to a predetermined extent inside the inner hose and comprise any from the list of:
a hose containing a process material, a hose containing air or another gas, a control wire, a feed rod, a hydraulic hose, a cable for data transmission and/or control signals.

13. A device according to claim 1 or 9, **characterised in that** the flexible drive member (4) is hollow and has a substantially tubular shape.

14. A device according to claim 1 or 9, **characterised in that** the flexible drive member (4) is hollow and has a circular cross-section at least in part.

15. A device according to claim 1, **characterised in that** the flexible drive member has a wall with a corrugated cross-section when viewed from a direction perpendicular to the long axis of the flexible drive member.

16. A device according to any of claims 9-16, **characterised in that** the flexible drive member is arranged with a cross section which comprises at least in part one or more parts with a circular-shaped cross-sections, and where two or more parts may have at least two cross-section with different diameters.

17. A device according to claim 1, **characterised in that** a sensor is arranged on or in the robot wrist for measuring a parameter dependent on a movement of the tool flange (7) and/or the input drive means (8).

18. A device according to claim 17, **characterised in that** the sensor is arranged on or in the robot wrist and placed relative to a guide or bearing supporting (13, 14) the flexible member.

19. A device according to claim 1, **characterised in that** the flexible drive member is arranged as an inner hose and comprises an insulating material with a dielectric strength of between 20-100kV.

20. A device according to claim 1, **characterised in that** the outside and/or surface of the flexible drive member arranged as an inner hose is arranged with a conductive or semiconductive material to avoid build up of an electrical charge.

21. A device according to claim 1, **characterised in that** the flexible drive member is arranged as an inner hose and formed from a polymeric material combined with at least one reinforcing member.

22. A device according to claim 16, **characterised in that** the reinforcing member comprises any of a spiral or a helical rod, tape or wire.

23. A device according to claim 8 or 9, **characterised in that** the flexible drive member arranged as an inner hose comprises a fluoropolymer or a fluoropolymer layer.

24. A device according to claim 1, **characterised in that** the hollow wrist comprises two rotatable parts arranged in series with each other, comprising a first wrist part (1) and a second wrist part (2) where a tool flange (7) or tool may be arranged on the second wrist part.

25. A device according to claim 1, **characterised in that** the hollow wrist comprises at least three rotatable parts arranged in series with each other, comprising a first wrist part (1) a second wrist part (2) and a third wrist part (3).

26. A method for operating an industrial robot or manipulator with a robot wrist comprising a plurality of rotatable parts arranged in series with each other, comprising at least a first wrist part (1) and a second wrist part (2), wherein each wrist part is arranged with one or more gear members to drive a said rotary movement of any said wrist part relative to said another wrist part, where said robot wrist is arranged with a tool flange (7) for carrying an applicator (11) or other tool attached to the second or a third wrist part (3), **characterised by** generating a control signal (31) to drive said tool flange, applying a control signal to a drive motor arranged to drive a flexible drive member (4) via an input drive means (8) as a power transmission element in order to move said tool flange dependent on the control signal.

27. A method according to claim 26, **characterised by** applying a compensation value (35) to the control signal to the drive motor.

28. A method according to claim 27, **characterised by** calculating a compensation value for the flexible drive member based on a model of at least one mechanical characteristic of the single drive member.

29. A method according to claim 28, **characterised by** calculating a compensation value for the flexible drive member dependent on a sensed value of tool flange movement fed back from a sensor arranged on or in the robot wrist

30. A method according to claim 28 and 29, **characterised by** calculating a compensation value for the flexible drive member based on any of: a model of at least one mechanical characteristic of said inner protection hose; a sensed value of tool flange movement fed back from a sensor arranged on or in the robot wrist.

31. A method according to claim 29 or 30, **characterised by** generating a control signal to rotating drive means connected to hand parts (1, 2, 3) relative each other so as to bend axis 5 so that a centre line of a tool or applicator mounted on 6 is at an angle of up to about 140° from a third arm, which may be arranged about axis 4.

32. A method according to claim 31, **characterised by** generating a control signal to rotating drive means so that the tool or applicator mounted on axis 6 is limited in a rotation extent and direction dependent on a characteristic of one or more process lines arranged inside the inner hose.

33. A system comprising a robot control unit (20) and at least one industrial robot or manipulator with a robot wrist comprising a plurality of rotatable parts arranged in series with each other, comprising at least a first wrist part (1) and a second wrist part (2), wherein each wrist part is arranged with one or more gear members to drive a said rotary movement of any said wrist part relative to said another wrist part, where said robot wrist is arranged with a tool flange (7) for carrying an applicator (11) or other tool attached to the second or a third wrist part, **characterised in that** said robot wrist (10) of said at least one robot is arranged with a flexible drive member (4) for transferring power from an input drive means (8) in the proximity of the first part of the wrist to the tool flange (7) arranged at the distal end of the robot wrist.

34. A system according to claim 33, **characterised in that** flexible drive member (4) of said robot wrist is arranged to comprise an inner hose inside said robot wrist.

35. A system according to claim 33, **characterised in that** the flexible drive member is equipped with a drive means connecting a first end of the single drive member to an input drive shaft (8) in the proximity of the first part (1) of the wrist, and a means for attaching a second end of the single drive member to the tool flange (7) at the distal end of the wrist.

36. A system according to claim 33, **characterised in that** the control unit (20), or another control unit connected to it, is arranged with one or more means to generate a compensation signal for the flexible drive member for application to the control signal to an axis drive motor of the said at least one robot.

37. A system according to claim 33, **characterised in that** the control unit (20), or another control unit connected to it, is arranged with one or more memory means storing one a computer program which when read into a computer or processor will cause the computer or processor to carry out a method according to the steps of any of claims 26-32.

38. A computer program which when read into a computer or processor will cause the computer or processor to carry out a method according to the steps of any of claims 26-32.

39. A computer readable medium comprising a computer program which when read into a computer or processor will cause the computer or processor to carry out a method according to the steps of any of claims 26-32.

40. Use of an industrial robot arranged with a robot wrist according to any of claims 1-25 for applying an internal or an external surface treatment operation or painting operation with an industrial robot.

41. Use of a system comprising at least one industrial robot arranged with a robot wrist according to any of claims 1-25 for carrying out an operation from any of the group of: welding, picking and/or packing, machine tending, welding, riveting, fettling, folding plate, cutting, bending plate, hemming plate, gripping an object, manipulating an object, stacking, pick and place.
